# FASCICULE DE BREVET EUROPEEN

(11) **EP 2 310 251 B1**
(45) Date de publication et mention de la délivrance du brevet: **12.12.2012**
(21) Numéro de dépôt: 09740428.9
(22) Date de dépôt: 03.08.2009
(51) Int. Cl.: B62D 57/04, B62D 37/02, B62D 35/00, B62D 39/00, B60K 5/00, B60K 5/08, B60K 5/10, B60K 6/00

(54) **VÉHICULE TERRESTRE MUNI D'UN SYSTÈME DE PROPULSION PAR ÉCOULEMENT D'AIR INTERNE**
MIT EINEM INNENLUFTSTROMANTRIEBSSYSTEM VERSEHENES LANDFAHRZEUG
LAND VEHICLE PROVIDED WITH AN INTERNAL AIR FLOW PROPULSION SYSTEM

(30) Priorité: 04.08.2008 FR 0855384
(43) Date de publication de la demande: 20.04.2011
(73) Titulaire: AIRBUS OPERATIONS (S.A.S), 31060 Toulouse (FR)
(72) Inventeur: CHANEL, Jean-Luc, F-31700 Blagnac (FR)
(74) Mandataire: Schmit, Christian Norbert Marie
(86) Numéro de dépôt international: PCT/FR2009/051547
(87) Numéro de publication internationale: WO 2010/015775

(56) Documents cités:
- DE-C- 602 297
- FR-A- 914 828
- GB-A- 305 641
- GB-A- 2 169 251
- US-A- 3 374 849
- US-A- 5 184 832
- US-A- 5 584 355

## Description

La présente invention concerne un véhicule terrestre muni d'un système de propulsion par écoulement d'air interne, voir par example le document GB-A-2169 251, divulguant toutes les caractéristiques du préambule de la revendication 1.

On connaît des véhicules terrestres mus par un groupe propulseur constitué d'un moteur à combustion interne et d'une hélice. Le principe de fonctionnement d'un tel système de propulsion est basé sur l'utilisation de l'air aspiré pour propulser le véhicule.

Le document FR500436 décrit un système propulseur fondé sur l'utilisation de l'écoulement d'air extérieur dont le groupe propulseur est constitué d'un moteur et d'une hélice extérieure. Les véhicules équipés d'un tel système de propulsion avaient l'apparence d'un avion sans aile. Par rapport aux véhicules conventionnels, ces véhicules à propulsion par écoulement d'air comportent les avantages techniques suivants : la simplicité et la légèreté de la chaîné cinématique, le rendement de propulsion, la simplicité de la conduite du fait de la simplicité de la chaîne cinématique qui ne comporte plus de boîte de vitesse et d'embrayage mais uniquement une commande d'accélérateur et de frein. En outre un autre avantage technique conféré par un tel véhicule terrestre propulsé par écoulement d'air est la mobilité et la stabilité du véhicule résultant de l'absence d'efforts aux roues rendant l'avancement du véhicule indépendant de l'état d'adhérence des roues au sol.

Toutefois l'hélice extérieure du groupe propulseur constitue un élément relativement encombrant, bruyant, peu esthétique, et surtout un danger pour les autres usagers. En outre un tel système propulseur génère un très faible rendement à basse vitesse et dans les cotes, rendant le véhicule très peu adapté à une circulation en ville et en montagne.

Des études récentes ont été réalisées pour que l'écoulement d'air externe par hélice extérieure soit remplacé par un écoulement d'air interne au véhicule. Le document FR 2 432 422 présente un véhicule comportant une seule hélice placée à l'avant du véhicule qui permet d'aspirer l'air extérieur et un compresseur de l'air aspiré ainsi que deux conduites d'air pour expulser l'air compressé. Une telle configuration est un compromis entre la solution ancienne d'une hélice extérieure face à la route telle que décrit dans le document FR 500436 et la solution d'un écoulement interne dans deux conduites d'air portant le flux propulsif vers l'extérieur. Toutefois ce système propulseur ne permet pas d'intégrer facilement l'hélice à la carrosserie du véhicule. De ce fait, il n'est pas très adapté d'un point de vue d'encombrement, de sécurité et esthétique. Par ailleurs, la configuration du système propulseur proposé dans ce document n'est pas optimale en terme d'utilisation de l'air aspiré, en effet la propulsion n'est pas directe, le flux de l'hélice ne débouche pas directement dans les deux tuyaux adjacents au cylindre, entraînant le risque d'une perte de charge ou d'un phénomène de bourrage d'air.

Un problème qui se pose alors et que vise à résoudre la présente invention, est de fournir un véhicule terrestre muni d'un système à propulsion par écoulement d'air interne qui non seulement par sa performance permet de propulser le véhicule uniquement par les efforts générés par l'écoulement d'air, mais aussi qui parallèlement ne génère pas de problème de sécurité, de problème esthétique, d'encombrement extérieur, et de bruit.

Pour atteindre ce but, la présente invention propose un véhicule terrestre muni d'un système de propulsion par écoulement d'air interne, ledit véhicule comprenant une carrosserie et un habitacle, ledit véhicule présentant un plan situé sensiblement au milieu dudit véhicule et perpendiculaire à un axe longitudinal du véhicule séparant la carrosserie en une partie avant et une partie arrière par rapport au sens du déplacement du véhicule (F), ledit système de propulsion comprenant:
- des prises d'air situées sur les surfaces de la partie avant de la carrosserie ;
- lesdites prises d'air étant reliées à au moins un groupe propulseur par au moins un circuit d'aspiration d'air de manière à aspirer l'air qui s'écoule aux parois ;
- ledit au moins un groupe propulseur étant relié à au moins un orifice d'éjection d'air par au moins un circuit d'éjection, l'air aspiré étant accéléré et éjecté au moyen dudit au moins un groupe propulseur vers l'extérieur via ledit au moins un orifice d'éjection de manière à générer un effort de propulsion pour déplacer le véhicule, caractérisé en ce que les prises d'air sont définies et réparties sur les surfaces de le partie avant de la carrosserie (11) de manière à aspirer sous l'effet de Coanda.

Selon une réalisation, ledit au moins un orifice d'éjection est constitué d'un ensemble de fentes, ménagées sur les surfaces de l'extrémité de la partie arrière ou à proximité de l'extrémité de la partie arrière de la carrosserie.

On entend par surfaces à proximité de l'extrémité de la partie arrière, les surfaces des panneaux latéraux, de plancher et de pavillon de la partie arrière de la carrosserie.

Selon une réalisation, l'extrémité de la partie arrière comporte en outre une portion sensiblement verticale formant un culot du véhicule, ledit au moins un orifice d'éjection étant formé d'une fente horizontale ménagée sur la surface dudit culot.

Selon une réalisation de l'invention, la carrosserie comporte une forme aérodynamique de manière à générer un écoulement d'air sensiblement laminaire.

Selon une réalisation, ledit au moins un groupe propulseur est constitué d'un moteur couplé à des moyens compresseurs d'air.

De manière générale, le moteur est un moteur thermique à combustion interne, il peut être un moteur électrique ou pneumatique. Les moyens compresseurs d'air peuvent être une hélice carénée, un fan ou tout type de compresseurs.

Selon une réalisation, le véhicule comporte en outre au moins un volet aérodynamique mobile ménagé sur la partie arrière de la carrosserie et un dispositif de commande apte à déplacer ledit volet entre une position de repos dans laquelle le volet est fermé et une position active dans laquelle le volet est ouvert.

Selon une réalisation, le véhicule comporte deux volets disposés symétriquement de part et d'autre de l'axe longitudinal du véhicule.

Selon une réalisation, le véhicule est muni de deux dispositifs de commande aptes à actionner les deux volets de manière dissymétrique ou simultanément.

Selon une réalisation, le véhicule terrestre comporte en outre un système d'entraînement électrique pour entraîner les trains de roues, ledit système de propulsion par écoulement d'air interne et ledit système d'entraînement électrique étant reliés à un système de commande permettant d'activer sélectivement le système d'entraînement électrique ou le système de propulsion par écoulement d'air interne ou les deux ensemble pour que le véhicule automobile puisse fonctionner respectivement en mode d'entraînement électrique, en mode à propulsion par écoulement d'air interne ou en mode hybride.

On entend par mode hybride, un mode de fonctionnement combinant le mode d'entraînement électrique et le mode de propulsion par écoulement d'air interne.

Le système d'entraîne électrique a pour objectif d'effectuer les tâches suivantes : marche avant et arrière à faible vitesse, accélération jusqu'au seuil de vitesse à la quelle le système de propulsion par écoulement d'air interne peut fonctionner de manière optimale, circulation urbaine et sur forte rampe. Le domaine des vitesses est ainsi couvert par les deux modes de fonctionnement indépendants mais pouvant être combinés ensemble.

De ce fait, il est possible d'adapter le groupe propulseur, à savoir le moteur et les moyens compresseurs d'air pour fonctionner à un seul régime correspondant au rendement maximal.

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une vue schématique de dessus d'un véhicule terrestre selon l'invention laissant voir partiellement l'intérieur du véhicule qui montre l'installation d'un système de propulsion par écoulement d'air interne ;
Figure 2 : une vue schématique de section longitudinale d'un véhicule selon l'invention ;
Figures 3A et 3.B : une vue schématique de face de la partie arrière formant le culot d'un véhicule et une illustration schématique de la fente d'éjection d'air ;
Figures 4 et 5 : des représentations schématiques des écoulements d'air autour du véhicule ;
Figure 6 : une vue schématique de profil en coupe d'un volet déplacé d'une position fermée vers une position ouverte.

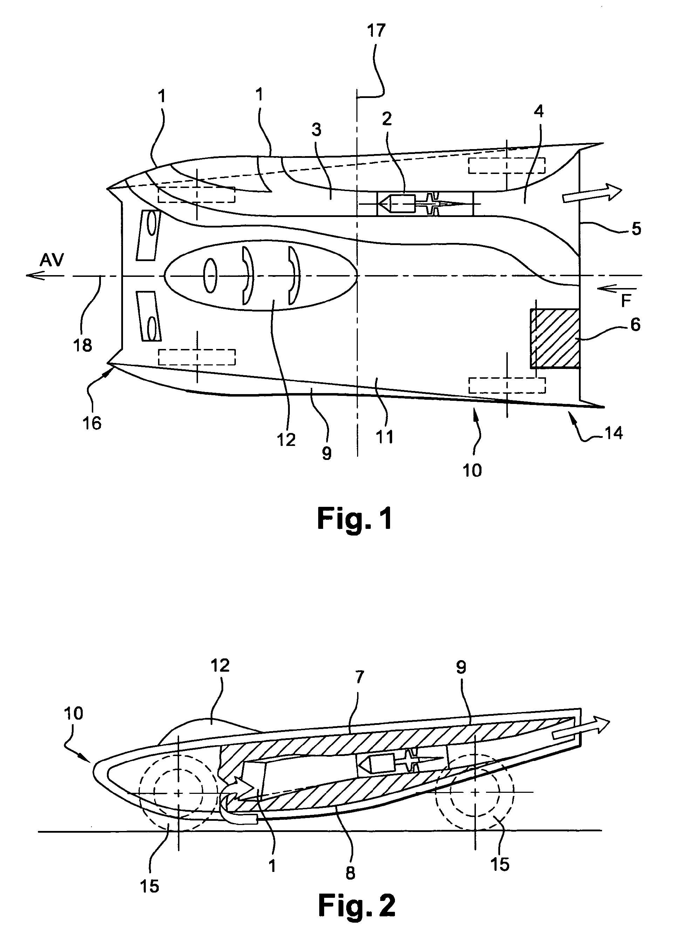

La Figure 1 et la Figure 2 montrent respectivement selon une vue de dessus et une vue de profil un véhicule terrestre 10 selon l'invention

Le véhicule 10 présente une carrosserie 11 définissant une paroi qui entoure un habitacle 12 dans lequel est installé un poste de conduite. Le véhicule 10 comporte un plan 17 situé sensiblement au milieu du véhicule et perpendiculaire à un axe longitudinal 18 du véhicule, ce plan permettant de définir une partie avant 16 et une partie arrière 14 de la carrosserie du véhicule.

De manière générale, la carrosserie 11 présente une portion sensiblement horizontale délimitant le pavillon 7 du véhicule, une autre portion sensiblement horizontale délimitant le plancher 8 du véhicule et des panneaux latéraux 9 (Figure 2). Dans la partie arrière du véhicule, les portions se rejoignent par une portion verticale formant le culot du véhicule.

La forme de la carrosserie est donnée ici à titre indicatif. De préférence, elle présente une forme aérodynamique, assimilable à une aile inversée, constituée de surfaces développables.

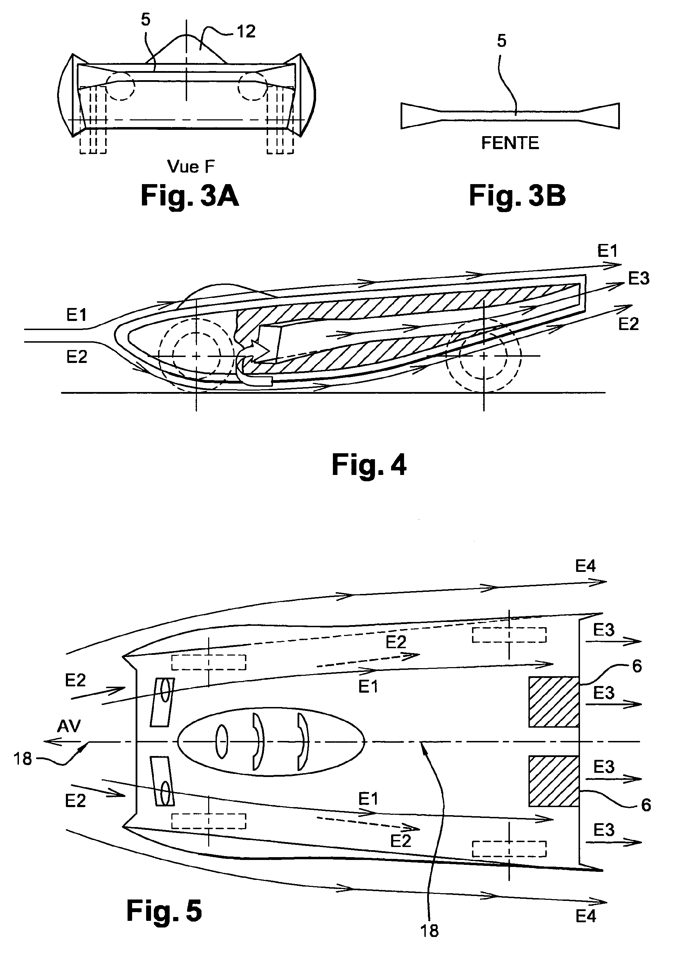

Ainsi, compte tenu de cette géométrie de la carrosserie, lorsque le véhicule est en mouvement vers l'avant selon le sens F, l'air s'écoulant aux parois des différentes portions du véhicule forme un écoulement d'air aérodynamique frontal (EI + E2) laminaire (Figure 4 et Figure 5). De ce fait, cette forme d'écoulement d'air le long des parois de la carrosserie 11 permet d'éviter un décollement qui est responsable de la traînée aérodynamique du véhicule et par conséquent de sa stabilité dynamique et de sa pénétration dans l'air.

De préférence, les panneaux latéraux 9 sont constitués de plaque plane ou galbée, sur laquelle vient se fixer une plaque forme convexe ayant une fonction aérodynamique.

Afin de créer un effort de propulsion pour déplacer le véhicule dans le sens de F, la partie avant 16 de la carrosserie présente des prises d'air 1 situées sur la paroi externe. Ces prises d'air sont reliées à un ou plusieurs groupes propulseurs 2 par un circuit d'aspiration d'air 3. Ainsi une masse d'air prélevée au moyen de prises d'air 1 judicieusement réparties sur la paroi de la carrosserie, sous l'effet Coanda, emprunte les conduits d'aspiration d'air 3 par l'action du groupe propulseur. Ces prises d'air génèrent des zones de dépression dans la partie avant de la carrosserie..

Le groupe propulseur 2 tel qu'illustré sur la Figure 1 est logé dans un carénage installé à l'intérieur de la carrosserie. Ce groupe propulseur est également relié à des orifices d'éjection d'air 5 situés dans la partie arrière 14 de la carrosserie par un circuit d'éjection 4. Ainsi l'air absorbé traverse le moteur et est rejeté à grande vitesse par le groupe propulseur via les orifices d'éjection 5 vers l'arrière de manière à générer une force de propulsion pour déplacer le véhicule 10.

Le groupe propulseur est installé de préférence à l'intérieur du véhicule, en son milieu permettant ainsi de supprimer tout problème de risque d'interférence avec des éléments situés à l'extérieur du véhicule, supprimant également le problème d'encombrement et esthétique.

De manière avantageuse, les zones de dépression d'air générées par l'admission d'air dans le groupe propulseur et les zones de pression d'air générées par l'éjection d'air du groupe propulseur sont positionnées sur la carrosserie de telle sorte qu'elles améliorent le coefficient de pénétration dans l'air. De ce fait tous les efforts générés par les zones de pression et de dépression d'air participent à la propulsion du véhicule.

Le véhicule peut comporter un ou une pluralité de groupes propulseurs.

Ces groupes propulseurs embarqués sur le même véhicule terrestre fonctionnent indépendamment les uns des autres, permettant ainsi de réguler la puissance de la propulsion en fonction du besoin de l'utilisation.

En outre, le fait de disposer d'une pluralité de groupes propulseurs permet d'utiliser des groupes de dimension plus petite, conférant une installation plus simple. Le système de propulsion est plus fiable qu'avec un seul groupe propulseur en cas de panne. Un ou plusieurs groupes propulseurs peuvent être enlevés du véhicule pour maintenance ou réparation sans immobiliser le véhicule qui peut rouler avec une puissance moindre temporairement.

Le groupe propulseur 2 est monté de manière amovible dans le véhicule. Son montage dans le véhicule ainsi que son enlèvement peuvent être effectués avantageusement par une personne sans outils. Il est monté sur deux rails en venant en buté contre une extrémité du rail, à l'extrémité opposée de rail, un écrou à main empêchant son retour. Il est ensuite branché manuellement à une arrivée de la source d'énergie pour son fonctionnement ainsi qu'à une commande de puissance.

La Figure 1 montre un mode préféré de l'invention dans lequel la partie arrière 14 comporte en outre une portion sensiblement verticale formant un culot du véhicule. Les orifices d'éjection 5 sont alors formés d'une fente horizontale ménagée sur toute la largeur du véhicule et sa section d'éjection étant égale à la surface de la portion verticale.

La Figure 3A montre selon une vue de face la partie arrière de la carrosserie formant un culot sur lequel est ménagée la fente horizontale et la Figure 3B montre pour plus de clarté la fente toute seule.

Les Figures 4 et 5 illustrent les écoulements d'air autour de la carrosserie.

De manière avantageuse, le flux de la propulsion (E3) en zone de culot permet de réduire la traînée aérodynamique induite par la surface supérieure du véhicule par l'effet Coanda, et de supprimer le décollement du flux d'air sur ces surfaces horizontales telles que le pavillon 7 (E1) et le plancher 8 (E2), et sur les surfaces verticales des panneaux latéraux 9 (E4). L'écoulement d'air résultant (E1 + E2 + E3 + E4) garde doc un régime laminaire, participant à l'effort de propulsion.

Une traînée de Vortex existe en partie arrière et latérale du véhicule lorsque les écoulements d'air en pression (E1) et dépression (E4) se rencontrent et se mélangent. Il est possible d'envisager une forme des panneaux latéraux 9 combinée avec une forme trapézoïdale de la fente au voisinage des panneaux pour supprimer cette traînée de Vortex. Car les écoulements (E1) et (E4) dans ces zones sont de même sens et vont sensiblement à la même vitesse.

Selon une variante de l'invention non illustrée dans laquelle la carrosserie du véhicule ne comporte pas de surface de culot, les orifices d'éjection 5 sont constitués d'un ensemble de fentes, ménagées sur les surfaces des panneaux latéraux 9, de plancher 8 et de pavillon 7 de la partie arrière 14 de la carrosserie. La fente comporte alors une forme d'ouverture choisie de manière à faire bénéficier un maximum d'effet Coanda aux écoulements d'air des surfaces adjacentes.

Selon une autre variante, les fentes ménagées sur les surfaces de pavillon 7, de plancher 8 et des panneaux latéraux 9 peuvent être ajoutés dans le mode préféré de l'invention dans lequel le culot est muni d'une fente horizontale 5.

Selon une forme de réalisation particulièrement avantageuse, le véhicule comporte des volets aérodynamiques 6 ménagés dans la partie arrière 14 de la carrosserie du véhicule. Ces volets ont pour fonction d'inverser le flux d'air à la sortie du groupe propulseur pour le faire dévier vers l'avant du véhicule, générant ainsi une traînée aérodynamique et donc une force de freinage appelée "contre poussée" qui contribue au ralentissement du véhicule.

La Figure 5 montre une forme de réalisation de l'invention dans lequel le véhicule comporte deux volets 6, disposés de manière symétrique de part et d'autre de l'axe longitudinal 18.

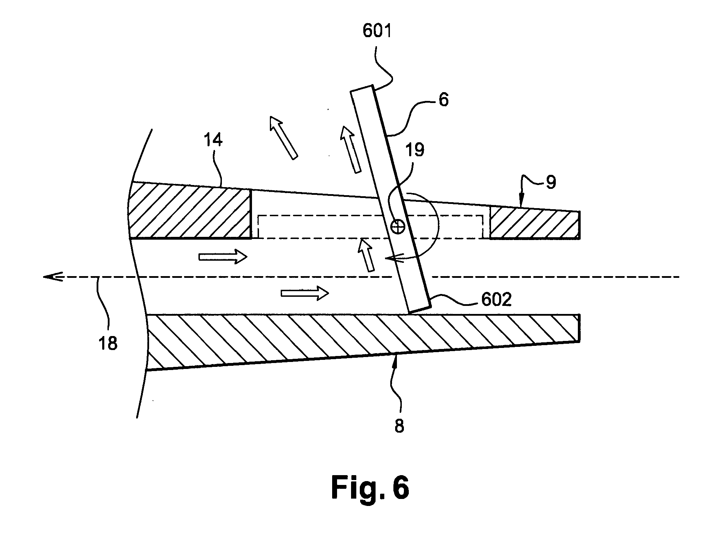

La figure 6 montre plus en détail le principe de fonctionnement d'un tel volet qui est ménagé dans l'épaisseur de la carrosserie. En position de repos, le volet est fermé, c'est-à-dire qu'il s'étend dans un prolongement de la paroi de la carrosserie. En position active, il est ouvert, c'est-à-dire qu'une partie du volet 601 s'étend vers l'extérieur de la carrosserie, et une autre partie 602 du volet vers l'intérieur de la carrosserie, dans une direction sensiblement perpendiculaire à l'axe longitudinal du véhicule 18. Ainsi lorsque le volet est ouvert, la partie s'étendant vers l'intérieur 602 obture le flux d'air à la sortie du groupe propulseur. Le flux d'air est alors bloqué, et est évacué hors de la carrosserie par un orifice dégagé par l'ouverture du volet. La partie du volet 601 s'étendant vers l'extérieur permet de diriger le flux d'air vers l'avant du véhicule. Cette déviation du flux d'air est illustrée sur la Figure 6 par des flèches.

On entend par volet aérodynamique, un volet dont la paroi extérieure a une forme telle que lorsque lorsqu'il est fermé, sa paroi extérieure forme une continuité aérodynamique avec les parois adjacentes de la carrosserie.

Pour effectuer ce déplacement entre la position inactive et la position active, le volet est monté pivotant sur la carrosserie, l'axe de pivotement 19 étant situé sensiblement au milieu du volet 6.

Le véhicule comporte en outre un dispositif de commande (non illustrés sur la Figure 6) associé à chaque volet tel qu'un vérin permettant d'actionner l'ouverture et la fermeture du volet. Ces dispositifs permettent d'actionner les deux volets simultanément lors d'une phase de freinage pour freiner le véhicule.

De manière avantageuse, ces dispositifs sont aptes également à actionner de manière dissymétrique les deux volets, permettant ainsi d'introduire un couple de lacet et de contribuer au virage du véhicule. Pour effectuer le virage, le véhicule est muni également d'un volant de direction agissant directement sur les roues de direction. Il est possible d'envisager d'introduire un couple de lacet par deux groupes propulseurs non alignés, permettant ainsi de contribuer au virage du véhicule. Ces trois actions peuvent êtres mises en oeuvre en parallèle ou séparément à la demande du conducteur, permettant de contrôler la stabilité du véhicule selon l'état de la route.

De manière à couvrir tous les domaines de vitesses, le véhicule terrestre est muni également d'un système d'entraînement électrique pour les roues 15 qui vient compléter le système de propulsion par écoulement d'air interne. Ces deux systèmes sont reliés ensemble à un système de commande disposé par exemple dans le poste de conduite permettant au conducteur d'activer sélectivement le système d'entraînement électrique ou le système de propulsion ou les deux simultanément pour que le véhicule puisse fonctionner respectivement en mode d'entraînement électrique, en mode à propulsion par écoulement d'air interne ou en mode hybride selon le besoin de son utilisation.

On détaille maintenant ci-dessous un exemple de fonctionnement du groupe d'entraînement hybride selon l'invention dans différentes phases de déplacement du véhicule.

Dans la phase de démarrage sur une surface plane ou en cote, le conducteur active le système d'entraînement électrique qui reste en fonction jusqu'à ce que le véhicule atteigne un seuil de vitesse à la quelle le groupe ou les groupes propulseurs peuvent fonctionner en régime à rendement maximum.

Dans la phase de roulage à grande vitesse, le conducteur désactive le système d'entraînement électrique et laisse fonctionner le système de propulsion par écoulement d'air interne.

Dans la phase de freinage, le conducteur active les volets 6 pour les mettre en position d'inversion de poussée afin d'amorcer la décélération du véhicule et le moteur électrique est mis en fonction en mode générateur pour freiner le véhicule.

Comme dans le cas des véhicules hybrides conventionnels, le moteur électrique est relié à un système de stockage d'énergie tel que des batteries pour stocker l'énergie de freinage électrique récupérée.

Le véhicule terrestre selon l'invention permet une fabrication industrielle plus simple et moins coûteuse par rapport à un véhicule conventionnel du fait de l'absence de boîte de vitesse et d'embrayage, et également en raison d'un faible nombre de pièces détachées par rapport à un véhicule conventionnel.

## Revendications

1. Véhicule terrestre (10) muni d'un système de propulsion par écoulement d'air interne, ledit véhicule comprenant une carrosserie (11) et un habitacle (12), ledit véhicule présentant un plan (17) situé sensiblement au milieu dudit véhicule et perpendiculaire à un axe longitudinal (18) du véhicule séparant la carrosserie en une partie avant (16) et une partie arrière (14) par rapport au sens du déplacement du véhicule (F), ledit système de propulsion comprenant :
- des prises d'air (1) ;
- lesdites prises d'air (1) étant reliées à au moins un groupe propulseur (2) par au moins un circuit d'aspiration d'air (3) de manière à aspirer l'air qui s'écoule aux parois ;
- ledit au moins un groupe propulseur (2) étant relié à au moins un orifice d'éjection d'air (5) par au moins un circuit d'éjection (4), l'air aspiré étant accéléré et éjecté au moyen dudit au moins un groupe propulseur (2) vers l'extérieur via ledit au moins un orifice d'éjection (5) de manière à générer un effort de propulsion pour déplacer le véhicule ;
**caractérisé en ce que** les prises d'air sont définies et réparties sur les surfaces de la partie avant de la carrosserie (11) de manière à aspirer l'air sous l'effet de Coanda.

2. Véhicule terrestre selon la revendication 1, **caractérisé en ce que** ledit au moins un orifice d'éjection (5) est constitué d'un ensemble de fentes, ménagées sur les surfaces de l'extrémité de la partie arrière (14) ou à proximité de l'extrémité de la partie arrière (14) de la carrosserie.

3. Véhicule terrestre selon la revendication 2, **caractérisé en ce que** l'extrémité de ladite partie arrière (14) comporte en outre une portion sensiblement verticale formant un culot du véhicule, ledit au moins un orifice d'éjection (5) est formé d'une fente horizontale ménagée sur la surface dudit culot.

4. Véhicule terrestre selon l'une des revendications précédentes, **caractérisé en ce que** la carrosserie comporte une forme aérodynamique de manière à générer un écoulement d'air sensiblement laminaire (E1 + E2).

5. Véhicule terrestre selon l'une des revendications précédentes, **caractérisé en ce que** ledit au moins un groupe propulseur (2) est constitué d'un moteur couplé à des moyens compresseurs.

6. Véhicule terrestre selon l'une des revendications précédentes, **caractérisé en ce que** ledit au moins un groupe propulseur (2) est monté de manière amovible dans le véhicule.

7. Véhicule terrestre selon l'une des revendications précédentes, **caractérisé en ce qu'**il comporte en outre au moins un volet aérodynamique mobiles (6) ménagé dans la partie arrière (14) de la carrosserie, et un dispositif de commande apte à déplacer ledit au moins un volet entre une position de repos dans laquelle le volet est fermé et une position active dans laquelle le volet est ouvert.

8. Véhicule terrestre selon la revendication 7, **caractérisé en ce qu'**il comporte deux volets, les deux volets étant disposés de part et d'autre l'axe longitudinal (18) du véhicule..

9. Véhicule terrestre selon la revendication 8, **caractérisé en ce qu'**il comporte deux dispositifs de commande, lesdits dispositifs étant aptes à actionner les deux volets de manière dissymétrique ou simultanément.

10. Véhicule terrestre selon l'une des revendications 1 à 9, **caractérisé en ce qu'**il comporte en outre un système d'entraînement électrique pour entraîner les trains de roues, ledit système de propulsion par écoulement d'air interne et ledit système d'entraînement électrique étant reliés à un système de commande permettant d'activer sélectivement le système d'entraînement électrique ou le système de propulsion par écoulement d'air interne ou les deux simultanément pour que ledit véhicule puisse fonctionner respectivement en mode d'entraînement électrique, en mode à propulsion par écoulement d'air interne ou en mode hybride.

## Claims

1. Land vehicle (10) furnished with an internal air-flow propulsion system, the said vehicle comprising a bodywork (11) and a passenger compartment (12), the said vehicle having a plane (17) situated substantially in the middle of the said vehicle and perpendicular to a longitudinal axis (18) of the vehicle dividing the bodywork into a front portion (16) and a rear portion (14) relative to the direction of movement of the vehicle (F), the said propulsion system comprising:
- air intakes (1),
- the said air intakes (1) being connected to at least one propulsion unit (2) by at least one air-aspiration circuit (3) so as to aspirate the air that flows to the walls;
- the said at least one propulsion unit (2) being connected to at least air discharge orifice (5) by at least one discharge circuit (4), the aspirated air being accelerated and ejected by means of the said at least one propulsion unit (2) to the outside via the said at least one discharge orifice (5) so as to generate a propulsion force to move the vehicle;
**characterized in that** the air intakes are defined and distributed on the surfaces of the front portion of the bodywork (11) so as to aspirate the air under the Coanda effect.

2. Land vehicle according to Claim 1, **characterized in that** the said at least one discharge orifice (5) consists of a set of slots, arranged on the surfaces of the end of the rear portion (14) or close to the end of the rear portion (14) of the bodywork.

3. Land vehicle according to Claim 2, **characterized in that** the end of the said rear portion (14) also comprises a substantially vertical portion forming a base of the vehicle; the said at least one discharge orifice (5) is formed from a horizontal slot arranged on the surface of the said base.

4. Land vehicle according to one of the preceding claims, **characterized in that** the bodywork comprises an aerodynamic shape so as to generate a substantially laminar air flow (E1 + E2).

5. Land vehicle according to one of the preceding claims, **characterized in that** the said at least one propulsion unit (2) consists of an engine coupled to compressing means.

6. Land vehicle according to one of the preceding claims, **characterized in that** the said at least one propulsion unit (2) is installed removably in the vehicle.

7. Land vehicle according to one of the preceding claims, **characterized in that** it also comprises at least one movable aerodynamic flap (6) arranged in the rear portion (14) of the bodywork, and a control device capable of moving the said at least one flap between a rest position in which the flap is closed and an active position in which the flap is open.

8. Land vehicle according to Claim 7, **characterized in that** it comprises two flaps, the two flaps being placed on either side of the longitudinal axis (18) of the vehicle.

9. Land vehicle according to Claim 8, **characterized in that** it comprises two control devices, the said devices being capable of actuating the two flaps dissymetrically or simultaneously.

10. Land vehicle according to one of Claims 1 to 9, **characterized in that** it also comprises an electrical drive system for driving the axle systems, the said internal air-flow propulsion system and the said electric drive system being connected to a control system used to activate selectively the electric drive system or the internal air-flow propulsion system or both simultaneously so that the said vehicle can operate respectively in electric drive mode, in internal air-flow propulsion mode or in hybrid mode.

## Patentansprüche

1. Landfahrzeug (10), das mit einem Antriebssystem durch Innenluftstrom versehen ist, wobei das Fahrzeug eine Karosserie (11) und einen Innenraum (12) aufweist, wobei das Fahrzeug eine Ebene (17) im Wesentlichen in der Mitte des Fahrzeugs und lotrecht zu einer Längsachse (18) des Fahrzeugs aufweist, die die Karosserie in einen vorderen Teil (16) und einen hinteren Teil (14) bezüglich der Bewegungsrichtung des Fahrzeugs (F) trennt, wobei das Antriebssystem Folgendes enthält:
- Lufteinlässe (1);
- wobei die Lufteinlässe (1) über mindestens einen Luftansaugkreis (3) mit mindestens einem Triebwerk (2) verbunden sind, um die entlang der Wände strömende Luft anzusaugen;
- wobei das mindestens eine Triebwerk (2) über mindestens einen Ausstoßkreis (4) mit mindestens einer Luftausstoßöffnung (5) verbunden ist, wobei die angesaugte Luft mittels des mindestens einen Triebwerks (2) beschleunigt und über die mindestens eine Ausstoßöffnung (5) nach außen ausgestoßen wird, um eine Antriebskraft zum Bewegen des Fahrzeugs zu erzeugen;
**dadurch gekennzeichnet, dass** die Lufteinlässe auf den Flächen des vorderen Teils der Karosserie (11) so definiert und verteilt sind, dass sie die Luft unter dem Coanda-Effekt ansaugen.

2. Landfahrzeug nach Anspruch 1, **dadurch gekennzeichnet, dass** die mindestens eine Ausstoßöffnung (5) aus einer Einheit von Schlitzen besteht, die auf den Flächen des Endes des hinteren Teils (14) oder in der Nähe des Endes des hinteren Teils (14) der Karosserie ausgebildet sind.

3. Landfahrzeug nach Anspruch 2, **dadurch gekennzeichnet, dass** das Ende des hinteren Teils (14) außerdem einen im Wesentlichen senkrechten Abschnitt aufweist, der einen Boden des Fahrzeugs formt, wobei die mindestens eine Ausstoßöffnung (5) von einem waagrechten Schlitz geformt wird, der auf der Fläche des Bodens ausgebildet ist.

4. Landfahrzeug nach einem der vorhergehenden Ansprüche, **dadurch gekennzeichnet, dass** die Karosserie eine aerodynamische Form aufweist, um eine im Wesentlichen laminare Luftströmung (E1 + E2) zu erzeugen.

5. Landfahrzeug nach einem der vorhergehenden Ansprüche, **dadurch gekennzeichnet, dass** das mindestens eine Triebwerk (2) aus einem mit Kompressoreinrichtungen gekoppelten Motor besteht.

6. Landfahrzeug nach einem der vorhergehenden Ansprüche, **dadurch gekennzeichnet, dass** das mindestens eine Triebwerk (2) entfernbar in das Fahrzeug montiert ist.

7. Landfahrzeug nach einem der vorhergehenden Ansprüche, **dadurch gekennzeichnet, dass** es außerdem mindestens eine bewegliche aerodynamische Klappe (6), die im hinteren Teil (14) der Karosserie ausgebildet ist, und eine Steuervorrichtung aufweist, die die mindestens eine Klappe zwischen einer Ruhestellung, in der die Klappe geschlossen ist, und einer aktiven Stellung verschieben kann, in der die Klappe offen ist.

8. Landfahrzeug nach Anspruch 7, **dadurch gekennzeichnet, dass** es zwei Klappen aufweist, wobei die zwei Klappen zu beiden Seiten der Längsachse (18) des Fahrzeugs angeordnet sind.

9. Landfahrzeug nach Anspruch 8, **dadurch gekennzeichnet, dass** es zwei Steuervorrichtungen aufweist, wobei die Vorrichtungen die zwei Klappen unsymmetrisch oder gleichzeitig betätigen können.

10. Landfahrzeug nach einem der Ansprüche 1 bis 9, **dadurch gekennzeichnet, dass** es außerdem ein elektrisches Antriebssystem aufweist, um die Radsätze anzutreiben, wobei das Antriebssystem durch innere Luftströmung und das elektrische Antriebssystem mit einem Steuersystem verbunden sind, das es ermöglicht, das elektrische Antriebssystem oder das Antriebssystem durch innere Luftströmung selektiv oder beide gleichzeitig zu aktivieren, damit das Fahrzeug im elektrischen Antriebsmodus, im Antriebsmodus durch innere Luftströmung oder im Hybridmodus arbeiten kann.
